(19) Europäisches Patentamt
European Patent Office
Office européen des brevets

(11) Publication number: 0 167 598
B1

# (12) EUROPEAN PATENT SPECIFICATION

(45) Date of publication of patent specification: 19.09.90

(51) Int. Cl.$^5$: C 08 L 39/04

(21) Application number: 85900564.7

(22) Date of filing: 26.12.84

(86) International application number:
PCT/US84/02122

(87) International publication number:
WO 85/02858 04.07.85 Gazette 85/15

## (54) POLYMER BLENDS CONTAINING A POLYMER HAVING PENDANT OXAZOLINE GROUPS.

(30) Priority: 27.12.83 US 565790
13.12.84 US 681396

(43) Date of publication of application:
15.01.86 Bulletin 86/03

(45) Publication of the grant of the patent:
19.09.90 Bulletin 90/38

(84) Designated Contracting States:
BE DE FR GB NL SE

(56) References cited:
US-A-2 897 182
US-A-3 488 307
US-A-3 509 235
US-A-4 474 923

(73) Proprietor: THE DOW CHEMICAL COMPANY
2030 Dow Center Abbott Road P.O. Box 1967
Midland Michigan 48640-1967 (US)

(72) Inventor: SCHUETZ, James, Edwin
1512 Crane Court
Midland, MI 48640 (US)
Inventor: MERIDITH, Brenda, Christine
2101 Eastlawn Drive Apt. No.12
Midland, MI 48640 (US)
Inventor: HOHLFELD, Ronald, William
2320 Old Pine Trail
Midland, MI 48640 (US)

(74) Representative: Sternagel, Hans-Günther, Dr. et al
Patentanwälte Dr. Michael Hann Dr. H.-G. Sternagel Sander Aue 30
D-5060 Bergisch Gladbach 2 (DE)

EP 0 167 598 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a compatible blend of two or more normally incompatible polymers. More particularly, this invention relates to thermoplastic blends of a first reactive polymer of polymer blend containing pendant cyclic iminoether groups and another reactive polymer or polymer blend containing groups which react with cyclic iminoether groups to form linkages between the reactive polymers. At least one of the reactive polymers can be extended with a miscible but nonreactive polymer or polymers to form a reactive blend thereof.

It is often desirable to prepare blends of polymers which maximize the desirable properties but minimize the deficiencies of the component polymers. For example, monovinylidene aromatic polymers, such as polystyrene, have desirable properties such as the ability to be easily thermoformed and good mechanical characteristics. However, such monovinylidene aromatic polymers have certain undesirable properties such as poor environmental stress crack resistance (ESCR). On the other hand, polyolefins such as polyethylene or polypropylene have relatively good ESCR and low temperature properties but are not as readily thermoformed as desired. It would be highly desirable to provide a blend of a monovinylidene aromatic polymer and other polyolefins which exhibits the desirable properties but not the deficiencies, of the component polymers. Similarly, it is often desirable to blend other polymers in like manner.

Unfortunately, however, such blends often do not exhibit these expected properties. Many such blends exhibit properties which are, in fact, far worse than those of the component polymers due to an incompatibility of the polymers. For example, monovinylidene aromatic polymers such as polystyrene and rubber modified polystyrene are notably incompatible with many polymers which would otherwise be advantageously blended therewith. Thus, most blends containing polystyrene and like polymers exhibit poorer properties than expected.

Various methods have been proposed to prepare blends of normally incompatible polymers. Generally, these methods have focused on the use of grafting techniques or the use of a third component, a compatibilizing agent, in the blend. For example, in US—A—4,386,187 and 4,386,188 it is taught to prepare blends of polyolefins and a polystyrene using a styrene/butadiene/styrene block copolymer. Compatibilizing agents which are ethylene/vinylacetate copolymers, ethylene/acrylic acid ester copolymers and ethylene/methacrylic acid ester copolymers have also been taught for use in preparing blends of polystyrene and polyolefins (JP—A—48—43031/1973). Other such compatibilizing agents are taught in, for example, US—A—4,188,432; 4,020,025; GB—A—1,363,463 and DE—B—241,375.

From GB—A—1194 195 a heat curable mixture is known consisting of (a) a polymer containing oxazoline or oxazine rings and (b) at least a polymer or another compound having at least two carboxylic acid groups. The polymer (a) is preferably a copolymer of 2-alkenyl-2-oxazoline or 2-alkenyl-5.6-dihydro-4H-1.3-oxazine with one or more other olefinically unsaturated compounds which do not contain free carboxylic acid groups.

US—A—3,488,307 refers to a coating composition which is a blend of 40—90% by weight of an acrylic polymer that has pendant amino ester groups and an acrylic polymer that contains an oxazoline drying oil constituent.

Unfortunately, these approaches to preparing compatible polymer blends often do not yield entirely satisfactory results. In many instances, the type and proportion of the component polymers which can be blended using these techniques is quite narrowly restricted. In addition, the inclusion of an additional component in the blend often has an adverse effect on the properties of the blend. Moreover, the blend achieved is still not as compatible as desired and accordingly the properties of the blend are sometimes not as good as expected.

Accordingly, it would be desirable to provide a blend of normally incompatible polymers in which improved compatibilization of the polymers and improved properties of the blend are achieved. It is further desirable to be able to maximize the type and proportion of the desirable component polymers in any particular blend.

This invention thus provides a polymer blend comprising a component having units containing a pendant cyclic iminoether group, characterized in that the blend is a thermoplastic polymer blend comprising a first reactive thermoplastic polymer containing a compatibilizing amount of repeating units containing a pendant cyclic iminoether group, and a second reactive thermoplastic polymer containing a compatibilizing amount of repeating units containing a co-reactive group which is capable of reacting with said cyclic iminoether group to form a linkage between said first and second reactive polymers, wherein said first and second reactive polymers are normally incompatible when said first and second polymers do not contain such cyclic iminoether and co-reactive groups.

Preferably said blend is characterized by said first and/or said second thermoplastic reactive polymer being extended with respective miscible nonreactive polymer(s).

The blends of this invention are a compatible (or miscible) blend of the component polymers. Accordingly such a blend exhibits the desirable properties of each of the component polymers with no significant decrease in properties due to incompatibility. An additional significant advantage can be achieved in that the amounts of reactive polymers which are employed can be reduced by extending them with miscible non-reactive polymers without decreasing the compatibility of the normally incompatible polymers.

In addition, the blends of this invention can be prepared using wide ranges of reactive polymer components as well as a variety of other types of miscible polymer components. By varying the proportions of cyclic iminoether and coreactive groups employed in the reactive polymers and by varying the type and amount of optional miscible nonreactive polymer blended with the respective reactive polymer, the properties of the resultant blend can be engineered to many desired end uses.

The term "blend" as employed herein refers to those solid mixtures of two or more polymers which are commonly referred to in the art as polymer blends or polymer alloys. The terms "compatible blend" or "miscible blend" and like terms, as employed herein, are not employed in the strict sense as meaning that the blend exhibits a single glass transition temperature, but instead are used to describe a blend which exhibits properties, especially physical properties, which are essentially intermediate to those of the component polymers, or better. By contrast, an "incompatible blend" or "immiscible blend" as used herein, refers to a blend which exhibits properties which are significantly poorer than those of the individual polymers.

The subject blend or polymeric alloy generally comprises at least two "reactive polymers" which are not normally compatible. The "first reactive polymer" is functionalized with a cyclic iminoether group and the "second reactive polymer" is functionalized with a coreactive group that is capable of crosslinking with the cyclic iminoether group. In one aspect of the invention at least one or, optionally, both of the reactive polymers are extended with miscible nonreactive polymer(s) to form a reactive blend thereof. The miscible nonreactive polymer can comprise the base polymer of the respective reactive polymer or any other polymer compatible with the reactive polymer. The reactive polymers and/or blends may then be blended to form a new blend or alloy. For example, the cyclic iminoether functionalized polymer can be extended with a miscible nonreactive polymer to render a reactive blend. Likewise, the coreactive second polymer can be extended with polymers to produce a coreactive polymer blend. Subsequently, the iminoether functionalized polymer or blend can be reacted with the coreactive functionalized polymer or blend.

The blends of this invention contain a first reactive polymer or polymer blend having pendant cyclic iminoether groups. Said cyclic iminoether groups are present in a compatibilizing amount, i.e., an amount which is at least sufficient to render the first reactive polymer or polymer blend compatible with the other reactive polymer or polymer blend employed herein. Of course, the amount of cyclic iminoether group which is required to compatibilize the first reactive polymer blend depends somewhat on the particular polymers employed, the relative amount thereof present in the blend and the amount of coreactive groups in the second reactive polymer. However, in general, a compatibilizing amount of said cyclic iminoether group is present when the repeating units containing said cyclic iminoether group comprise at least 0.01 weight percent of the first reactive polymer.

Since, as described more fully hereinafter, the cyclic iminoether group apparently forms a linkage with the coreactive group on said second reactive polymer, it is readily seen that the degree of cross-linking and the molecular weight of the polymers of the blend can also be controlled with the proportion of cyclic iminoether and coreactive groups present in the blend. In fact, with control of the amounts of such groups in the blend, the blend of this invention can be prepared as desired to form a very lightly crosslinked thermoplastic blend. However, it is only essential that the amount of cyclic iminoether group in said first reactive polymer and coreactive group on said second reactive polymer be sufficient to compatibilize themselves (with or without a miscible nonreactive polymer) in the blend. Most typically, the first reactive polymer contains from 0.01 to 10 weight percent of repeating units containing pendant cyclic iminoether groups. More preferably, the first reactive polymer contains from 0.1 to 5 weight percent of such repeating units.

The cyclic iminoether groups are advantageously described by the general structure:

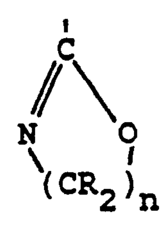

wherein each R is independently hydrogen, or an inertly substituted hydrocarbon containing 18 or fewer carbon atoms; and n is a number from 1 to 5. Said cyclic iminoether group can be attached to the polymer chains through any of the carbon atoms in the ring. Preferably, the cyclic iminoether is a 2-iminoether, i.e., is attached to the polymer chain through the 2-carbon atom to yield a structure as represented as

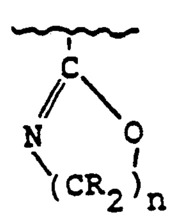

wherein R and n are as defined hereinbefore. Preferably, each R is hydrogen or lower alkyl and n is 1, 2 or 3. Most preferably, each R is hydrogen, n is 2 and the cyclic iminoether is a 2-oxazoline group. By "inertly substituted" it is meant that the referenced group contains no functional group which interferes with the polymerization or curing of the oxazoline group.

Polymers containing repeating units having pendant cyclic iminoether groups are advantageously prepared by the polymerization of a monomer mixture comprising an ethylenically unsaturated monomer containing a cyclic iminoether group. Preferably, such monomer is a 2-alkenyl-2-oxazoline wherein said alkenyl group contains from 2 to 8, preferably 2 to 4 carbon atoms. Most preferably, said monomer is 2-isopropenyl-2-oxazoline.

The first reactive polymer is a polymer of any monomer which (a) can be modified to contain pendant cyclic iminoether groups, or (b) can be copolymerized with a monomer which contains or can be modified to contain pendant cyclic iminoether group. In the preferred embodiment, wherein an ethylenically unsaturated cyclic iminoether is employed as a monomer, the first reactive polymer is advantageously a polymer of an addition polymerizable monomer copolymerizable therewith.

Said first reactive polymer is advantageously a polymer of a lower alkene, particularly a $C_1$—$C_8$ alkene, more particularly, ethylene or propylene as well as copolymers thereof; a conjugated diene such as butadiene or isoprene as well as copolymers thereof; a vinylidene halide such as vinylidene chloride or copolymers thereof; vinyl acetate; an ether of an α,β-ethylenically unsaturated carboxylic acid such as alkyl esters of acrylic or methyl acrylic acid and copolymers thereof; a monovinylidene aromatic compound such as styrene, vinyltoluene, t-butyl styrene and vinylnaphtalene; as well as polymers of diverse other addition polymerizable monomers. Ethylenically unsaturated cyclic iminoethers, in particular 2-alkenyl-2-oxazolines, generally resemble styrene in their polymerization reactions. Accordingly, as a rule of thumb, polymers of monomers which are copolymerizable with styrene will generally be usefully employed herein. Due to the polymerization reactions of 2-alkenyl-2-oxazolines and the tendency for styrenic polymers to be incompatible with a wide range of other thermoplastic materials, it is preferred that the first polymer be a polymer of a 2-alkenyl-2-oxazoline and styrene, especially 2-isopropenyl-2-oxazoline and styrene.

The coreactive group is one which is capable of reacting with said cyclic iminoether group to form a linkage between said first and second reactive polymer. Such coreactive group is typically an electrophilic group containing an active hydrogen. Examples of such groups include carboxylic acid, amino or hydroxyl groups.

The coreactive group may be pendant on said second reactive polymer, may form terminal groups thereon or may be incorporated into the polymer backbone thereof. Polymers containing coreactive groups along the polymer backbone include, for example, polyamines, such as the diverse polyalkylene amines. Polymers containing terminal coreactive groups include, for example, diverse polysulfides (Thiokols), epoxy resins and polyalkylene glycols.

Most generally, said second reactive polymer contains pendant coreactive groups which are derived from an addition polymerizable monomer containing the desired coreactive group. Preferred are polymers having repeating units derived from α,β-ethylenically unsaturated monomers containing said coreactive groups. Examples of such polymers are polymers of unsaturated carboxylic acids such as acrylic acid, methacrylic acid, itaconic acid and maleic acid and unsaturated amines such as vinylamine. In addition, polymers of other monomers which can be chemically modified to form pendant coreactive groups in the polymers, such as acrylonitrile, are usefully employed herein.

The second reactive polymer contains at least a sufficient amount of said coreactive groups to compatibilize itself with said first reactive polymer. As stated hereinbefore, a compatibilizing amount of said coreactive group will depend on the particular polymers employed in the blend as well as the relative proportions of said polymers in the blend and the amount of the iminoether groups present on said first reactive polymer. However, as with the iminoether group, a compatibilizing amount of the coreactive group is typically present when at least 0.01 weight percent of the repeating units of the second reactive polymer contain coreactive groups. When said coreactive group is an integral part of the structure of the polymer backbone, as many as 100 weight percent of such repeating units in the second reactive polymer may contain coreactive groups. Typically, when said coreactive group is a pendant group incorporated into said second reactive polymer for the primary purpose of compatibilizing the blends of this invention, it is preferred that the repeating units containing said coreactive groups comprise from 0.01 to 10, more preferably, from 0.1 to 5 weight percent of said second reactive polymer.

The second reactive polymer can be one of any thermoplastic polymer which contains or can be modified to contain a copolymer group as described hereinbefore. Addition polymers such as polymers of olefins, vinyl halides, vinylidiene halides, acrylic esters, monovinylidene aromatics and the like as described hereinbefore in conjunction with a description of said first reactive polymer are useful with said second reactive polymer. The second reactive polymer is generally a copolymer of an addition polymerizable monomer which contains said coreactive group or which can be modified subsequent to polymerization to impart said coreactive group thereto. For example, any of the aforementioned addition polymers can be copolymerized with an addition polymerizable carboxylic acid to impart carboxyl groups to the polymer. Amino groups, amide groups and like coreactive groups can be imparted to the second reactive polymer in similar manner by copolymerizing a monomer mixture containing the desired

proportion of an addition polymerizable monomer containing such group. Also, graft or block copolymers wherein at least one of the grafted segments or blocks contain a reactive group can be employed herein.

Polymers of certain monomers such as vinyl or vinylidene halide or acrylonitrile can be modified after the polymerization thereof to impart coreactive moieties thereto. For example, vinyl chloride can be reacted with ammonia or a primary amine to place pendant amine groups on the polymer. Similarly, acrylonitrile can be hydrogenated after its polymerization to form pendant amine groups.

Certain other polymers which normally contain coreactive groups may be employed as the second reactive polymer. For example, polymers containing repeating amine linkages, such poly(ethyleneimine) or a partially hydrolyzed poly(2-alkyl-2-oxazoline) are suitable as the other polymer herein. Other suitable polymes include those which contain amine, carboxylic acid, hydroxyl, epoxy, mercaptan, anhydride and like groups in the polymer chain or as end groups therein.

When the second reactive polymer does not normally contain coreactive groups it is generally desirable to prepare the polymer with relatively small amounts of said coreactive groups. This is because it is usually desirable to minimize the effect of the coreactive group or monomers containing said coreactive group on the physical properties of the polymer. The presence of large amounts of certain reactive groups, such as acid groups, can cause the blend to have certain undesirable properties such as water-sensitivity, adhesion to molds and corrosion of molds.

The blends of this invention are advantageously prepared from the component polymers and/or blends thereof by conventional melt blending or solution blending techniques. Melt blending is advantageously performed by heating each polymer to a temperature about its softening point and thoroughly mixing the softened polymers. Solution blending is performed by dissolving each component polymer into a common solvent and precipitating the dissolved polymers therefrom. Melt blending is the preferred method of preparing the blends of this invention.

Generally, the reactive polymers (and the miscible nonreactive polymers if used) can be simultaneously blended to form the subject blend. However, where it is desirable to first form a preblend of the reactive polymers, only miscible nonreactive polymer which corresponds to the continuous phase of the preblend can be post-blended. This characteristic is the result of the reactive polymer which makes up the discontinuous phase not being able to compatibilize its respective miscible nonreactive polymer due to the surrounding continuous phase which is composed of a noncompatible polymer which prevents the incorporation of the miscible polymer. On the contrary, the discontinuous phase does not prevent the extension of the continuous phase reactive polymer with its corresponding miscible nonreactive polymer. Preferably, the reactive polymers are either blended simultaneously with the miscible nonreactive polymers or preblended with their respective miscible nonreactive polymer.

Preferably, when a miscible nonreactive polymer is contained in the blends according to the invention, the reactive polymer is extended with miscible nonreactive polymer in a five to one weight ratio or less of nonreactive polymer to reactive polymer. Higher levels of nonreactive polymer can progressively deteriorate the blend properties.

Nonreactive polymers that can be blended with the reactive polymers are those which are normally miscible (compatible) with either of the reactive polymers. For instance, reactive polystyrene (cyclic iminoether functionalized polystyrene) can be blended with polyphenylene oxide or a polystyrene; and a coreactive polymer such as ethylene acrylic acid can be pre-blended with a polyethylene. One preferred blend consists of reactive polystyrene and high impact polystyrene with ethylene acrylic acid and low density polyethylene.

Although it is not intended to limit the invention to any theory, it is believed that the compatibility of the blends of this invention is due to the reaction of said coreactive and iminoether groups present therein. Said coreactive and iminoether groups are believed to react to form linkages between said first and second reactive polymer, thereby overcoming the normal tendency of these polymers to resist the formation of a compatible blend.

Since crosslinkages between the polymers are present in the blends of this invention, it is apparent that presence of linking groups on each polymer can also be used as a control on the rheological and thermoplastic properties of the blends. Since the presence of such linking groups increase the molecular weight of the polymers in the blends, increasing the amounts of such linkages enables the practitioner to prepare more viscous, stronger materials by further increasing the amount of linkage in the blends.

Typically the formation of said linkages is achieved by the application of a moderate amount of heat to the blends. The amount of heat required is typically dependent on the particular coreactive group employed. In general, carboxylic acid groups are more reactive than amide, amine or hydroxyl groups and therefore require lower temperatures to form such crosslinkages. Usually, when a hot blending technique is employed to form the blends, the temperature at which the melt blending is performed is generally sufficient to cause the formation of linkages therein. Generally, and especially when the coreactive group is a carboxylic acid, such linkages are formed in one minute or less at the temperatures used to melt blend the polymers. It may be desirable to incorporate into the blend a catalyst which increases the rate of the reactive between the iminoether and coreactive group. Lewis acids such as zinc chloride or iron chloride are suitable as such catalysts. In addition, it may be desirable to include a plasticizer or lubricant in the blends in order to facilitate the iminoether and coreactive groups contacting each other in the blending process. However, the inclusion of either a catalyst, plasticizer or lubricant is optional herein. An important

advantage of the present invention is that the formation of links in the blends of this invention is accomplished without the formation of any by-products and without the formation of ionic links. Unlike most curable systems, in which water, ammonia, or alcohol or other condensation product is formed in the curing reaction, the formation of links in this invention does not create such by-products. Accordingly, the links are formed in these blends without the undesirable formation of vaporous condensation products and without introducing such condensation products as impurities in the blends. The use of ionic crosslinks is also undesirable because such ionic crosslinks are often sensitive to pH, water and electrolytes and render the blends somewhat hydrophilic.

In one aspect, the properties of the blends can be adjusted by the amount and type of miscible nonreactive polymer blended with either of the reactive polymers. The cyclic iminoether functionalized polymer or coreactive polymer can be effectively diluted to a desired level which will control the amount of potential crosslinking. This will also allow the use of nonreactive polymers which are less expensive with reactive polymers to design more economic blends.

The physical and chemical characteristics of the blends prepared with both reactive and nonreactive polymers are generally proportional to the amount of polymers employed in the blends.

The process of extending the reactive polymers with compatible polymers can therefore be employed to improve the properties of the final blend. For example, where blending the reactive polymers resulted in a blend having a low melt flow rate either of the reactive polymers could be first extended with an appropriate polymer having a high melt flow rate such that the final blend had an acceptable flow rate. Therefore, the process of extending the reactive polymers allows the skilled artisan an opportunity to selectively engineer the final blend properties.

The blends of this invention may be employed in most applications for which the component polymers are suitable. Said blends may be employed to form shaped articles of all types as well as for films for packaging and like usages.

The following examples are provided to illustrate the invention but not to limit the scope thereof as claimed. All parts and percentages are by weight unless otherwise indicated.

Experiment 1

In a Brabender mixer heated to about 220°C were softened 25 grams (g) of an ethylene acrylic acid (EAA) copolymer (9 percent by weight repeating acrylic acid units). To the softened EAA polymer was added 25 g of a styrene/2-isopropenyl-2-oxazoline (SIPO) copolymer containing 1 percent by weight repeating isopropenyl oxazoline (IPO) units. Mixing is continued until a homogeneous appearing blend is obtained.

The heat distortion temperature, heat distortion temperature under load, tensile strength, tensile modulus, elongation at break, notch impact strength and melt flow of the resulting blend were determined in conventional manner and are reported as Sample No. 1 in Table I following. For comparing corresponding values a commercially available polystyrene, an EAA copolymer used in preparing the blend and a commercially available high-impact polystyrene were obtained and reported in Table I following.

For these and other samples, the heat distortion temperature was determined according to ASTM D1525 and is given in °C and °F. The heat distortion temperature under load was determined at 1.82 MPa (264 pounds per square inch) according to ASTM D648 and is given in °C and °F. The tensile strength, tensile modulus and percent elongation were determined according to ASTM D638, the tensile strength and modulus being given in Mega Pascals (MPa) and pounds per square inch (psi). The impact strength is determined according to ASTM D256 and is given in Joules per meter of notch (J/m) and foot pounds per inch notch (ft.lb/in). The melt flow rate was determined according to ASTM DT1238 and is given in grams per 10 minutes (g/10 min).

TABLE I

| Sample | Sample No. 1 | PS[1]* | EAA[2]* | HIPS[3]* |
|---|---|---|---|---|
| Heat Distortion Temperature in °C and (°F) | 88 (190) | 104 (220) | 77 (170) | 100 (212) |
| Heat Distortion Under Load in °C and (°F) | 52 (126) | 99 (210) | ND | 92 (197) |
| Tensile Strength in MPa and (psi) | 20 (2,900) | 36 (5,200) | 7.6 (1,100) | 18 (2,600) |
| Tensile Modulus in MPa and (psi) | 414 (60,000) | 2900 (420,000) | <69 (<10,000) | 1600 (230,000) |
| Elongation (%) | 50 | 2 | >150 | 40 |
| Impact Strength in J/m and (ft.-lb./in.) | 534 (10) | 10.7 (0.2) | NB | 80.1 (1.5) |
| Melt flow in g/10 min. | 1.7 | 7 | ND | 3.0 |

* - Not an example of the present invention.

ND - Not Determined.

NB - Sample does not break, therefore no value is obtained.

[1]Polystyrene, $M_n$ = 200,000.

[2]Ethylene/Acrylic acid copolymer.

[3]High Impact Polystyrene.

It is readily seen from the data presented in Table I that a compatible blend of the SIPO and EAA polymer was achieved. Excellent tensile and heat distortion properties were obtained with the blend of this invention in contrast to non-compatible blends of styrenic and olefin polymers which exhibit notably poor tensile properties.

In order to monitor the formation of linkages between the SIPO and EAA polymers, torque mesurements were made while mixing varying EAA and SIPO polymers in a Brabender as described hereinbefore. As a control, a torque measurement was made on a 50/50 blend of polystyrene and an EAA (3 percent acrylic acid) polymer. Upon adding the polystyrene to the softened EAA polymer, the torque exerted by the blend abruptly increased due to the presence of unsoftened polystyrene in the system. As the polystyrene softens and is blended with the EAA polymer, the torque steadily decreases until a constant value of about 120 meter·grams was reached. This blend was incompatible as exhibited by poor physical properties.

In like manner, the torque exerted by a 50/50 blend of the same EAA polymer and a SIPO polymer containing 0.2 percent repeating IPO units was determined. The torque exerted in preparing the blend was essentially the same as that of the control, indicating that the crosslinkages formed between the SIPO and

EAA polymers did not significantly affect the general rheology of the blend. However, tensile testing indicated that the blend had significantly improved physical properties as compared to the control indicating that sufficient linkages between the EAA and SIPO polymers were formed to compatibilize the blend.

A third evaluation was run, this time employing a 1 percent IPO SIPO polymer. This time, the blended polymers exhibited a torque of 160 meter·grams indicating that significant crosslinkages between the EAA and SIPO polymers occurred.

A fourth evaluation was run, this time employing a 50/50 blend of an EAA polymer containing 6.5 percent acrylic acid unit and a 1 percent IPO SIPO polymer. After the SIPO polymer was melted and blended with the EAA, the torque exerted by the blend exhibited a constant value of about 180 meter·grams, indicating that a still greater amount of linkages were formed between the component polymers.

A fifth evaluation was run employing 25 g of the same EAA polymer as used in the fourth evaluation, 16 g of a 5 percent IPO SIPO polymer and 9 g of a 10 percent IPO SIPO polymer. The torque exhibited by the blend reached a constant value of about 230 meter·grams.

A sixth evaluation was run employing a 50/50 blend of a 9 percent acrylic acid ethylene acrylic acid polymer and a 10 percent IPO SIPO polymer. This time the torque exerted by the blend reached a maximum as the SIPO was added, fell to a minimum value of about 300 meter·grams as the SIPO softens and then gradually rose to about 400 meter·grams as linkages between the EAA and the SIPO polymers formed.

To further vary the formation of linkages between the SIPO and the EAA polymers, a blend of a 2.5 percent IPO SIPO polymer and a 10 percent acrylic acid EAA polymer was prepared by melt-blending. This blend was studied by infrared variable temperature techniques by heating the blend from ambient temperature to about 200°C in hot orthodichlorobenzene while periodically taking infrared scans of the heated blend. The initial cool system exhibited infrared peaks corresponding to the presence of dimerized $(COOH)_2$ groups and oxazoline rings as well as a small proportion of amide ester groups. As the blend was heated, the dimerized $(COOH)_2$ and oxazoline peaks diminished while the amide ester peaks increased in intensity indicating that the carboxyl and oxazoline groups were reacting to form amide ester groups. Upon heating the sample, the amide ester peak did not significantly decrease in intensity indicating that the amide ester linkages were permanent and stable.

## Experiment 2

In a Brabender mixer equipped with a torque measuring apparatus 75 parts of high density polyethylene/maleic anhydride graft copolymer (HDPE/MA) containing 1 percent by weight maleic anhydride units were softened at 220°C. To the softened HDPE/MA polymer was added 25 parts SIPO polymer containing 1 percent IPO units. Upon adding the SIPO polymer, the torque exerted by the blend increased. The torque then decreased as the SIPO was softened and blended. The torque slightly increased again as crosslinkages between the SIPO and HPDE/MA polymers formed and then reached a constant value of about 270 meter·grams. A sample of the resulting blend was compression molded at 160°C and 68.9 MPa (10,000 psi) for 3 minutes. The notch impact strength of the molded sample was measured and found to be 46.7 J/m (0.874 ft.-lb./in).

The foregoing experiment was repeated, this time using 30 parts SIPO and 70 parts HPDE/MA. The torque exerted by the blend followed a pattern similar to that of the previous sample reaching a constant value of about 280 meter·grams. The notched impact strength of this blend was 28.5 J/m (0.532 ft.-lb./in).

The experiment was again repeated, this time using 35 parts SIPO polymer and 65 parts HDPE/MA polymer. Again a similar torque pattern is seen with the torque reaching a final constant value of about 280 meter·grams. The notched impact strength of this sample was 26.0 J/m (0.487 ft.-lb./in).

Another blend containing 70 percent HDPE/MA polymer and 30 percent SIPO polymer was prepared in like manner except 0.2 percent zinc chloride was added to the blend to promote the formation of crosslinks between the polymers. Mechanical testing of molded samples of this blend was conducted with results as reported in Table II following.

TABLE II

| Sample | HDPE/MA//SIPO[1] | PS[2] | HDPE[3] |
|---|---|---|---|
| Heat Distortion in °C and Temperature (°F) | 121 (250) | 104 (220) | 127 (260) |
| Heat Distortion Under Load in °C and (°F) | 65 (149) | 99 (210) | 53 (127) |
| Tensile Strength in MPa and (psi) | 29 (4,200) | 36 (5,200) | 30 (4,400) |
| Tensile Modulus in MPa and (psi) | 1700 (240,000) | 2900 (420,000) | 1000 (150,000) |
| Elongation in % | 70 | 2 | >150 |
| Impact Strength in J/m and (ft.-lb./in.) | 139 (2.6) | 10.7 (0.2) | 139 (2.6) |
| Melt Flow in g/10 min. | 0.6 | 7 | 0.8 |

[1] 70 percent high density polyethylene grafted with 1 percent maleic anhydride polymer : 30 percent styrene/isopropenyl oxazoline copolymer containing 1 percent isopropenyl oxazoline units.

[2] Polystyrene, Mn = 200,000.

[3] High density polyethylene

As can be seen from the data presented in Table II, excellent mechanical properties were exhibited by this blend. By comparing the properties of the blend with those of polystyrene and high density polyethylene, it is seen that the blend exhibited properties which are generally intermediate to those of the polystyrene and HDPE.

Experiment 3

Four blends of a 75 percent styrene/24 percent acrylonitrile/1 percent IPO terpolymer (SANIPO) and a 94 percent propylene/6 percent acrylic acid copolymer (PAA) were prepared in a Brabender mixer at the proportions indicated in Table III following. Two of the blends also contained 0.6 percent zinc chloride. As a control, a blend of polystyrene and the PAA polymer was also prepared. Torque measurements of the blend were made as a measure of the compatibility of the blends.

TABLE III

| Sample No. | % SANIPO[1] | % PAA[2] | %PS[3] | %ZnCl[4] | Torque[5] meter·grams |
|---|---|---|---|---|---|
| III-A | 80 | 20 | -- | 0 | 410 |
| III-B | 70 | 30 | -- | 0 | 290 |
| III-C | 70 | 30 | -- | 0.6 | 290 |
| III-D | 60 | 40 | -- | 0.6 | 270 |
| III-E* | -- | 30 | 70 | 0 | 150 |

*Not an example of this invention.

[1]Percent by weight Styrene/acrylonitrile/IPO (75/24/1) terpolymer.

[2]Percent by weight propylene acrylic acid (94/6) copolymer.

[3]Percent by weight polystyrene.

[4]Percent by weight zinc chloride catalyst.

[5]Measured on a Brabender apparatus.

In the control (Sample No. III—E) the polystyrene and PAA polymers resisted blending due to the mutual incompatibility thereof. The resulting blend was a stringy mixture exhibiting poor plastic properties. By contrast, each of Sample Nos. III—A through III—D exhibited good plastic properties evidencing a compatibilization of the component polymer. The increased torque measurement for Sample Nos. III—A — III—D as compared with Sample No. III—E indicated increased compatibility between the compared polymers.

Experiment 4

In a Brabender mixer 75 parts of a SIPO (1 percent IPO) copolymer was softened at 220°C. To the softened SIPO was added 25 parts of a carboxylated polyester resin, sold as Vitel® VPE6434. The blending was continued until the blend assumed a homogeneous appearance. Torque measurements made during the blending indicated that crosslinkages are formed between the component polymers during blending. The torque exerted by the blend reached a final constant value of about 170 meter·grams.

For comparison, this experiment was repeated this time substituting 75 parts polystyrene for the SIPO polymer. Torque measurements showed no formation of linkages between the polymers. The final torque reading was only 90 meter·grams.

Experiment 5

In this example, blends of a vinylidene choride/methacrylic acid copolymer (1 percent methacrylic acid) were prepared with diverse other polymers.

35 parts polystyrene were softened on a Brabender mixer at 220°C. To the softened polymer 65 parts of vinylidene chloride/methacrylic acid copolymer were added. Torque measurements indicated the formation of no crosslinkages between the polymers. Substitution of a 1 percent IPO SIPO copolymer for the polystyrene resulted in the formation of substantial amounts of linkages between the component polymers. Similarly, substitution of 15 percent chlorinated polyethylene and 20 percent of a 1 percent IPO SIPO copolymer for the polystyrene again provided a blend in which linkages between the component polymers were formed.

The foregoing experiment was again repeated, this time employing in place of the polystyrene a coagulated methyl methacrylate/ethylacrylate latex which had been coagulated to powdered form.

Viscosity measurements made during blending indicated no formation of crosslinks between these polymers. However, when a methyl methacrylate/ethylacrylate/acrylic acid/IPO polymer was employed, viscosity measurements during the blending clearly indicated the formation of linkages between the polymers and the resulting blend was a compatible blend exhibiting good physical properties.

Experiment 6

In a Brabender mixer heated to 280°C at 50 rpm the polymer blends listed in Table IV were melt blended. The subject reactive blends exemplary of the invention were prepared by mixing the polyphenylene oxide (PPO) and polystyrene/2-isopropenyl-2-oxazoline (SIPO) copolymer containing 1 percent by weight repeating 2-isopropenyl-2-oxazoline (IPO) units for approximately 3 minutes until a homogeneous blend was obtained. Similarly, a control blend was prepared by first blending the polyphenylene oxide and polystyrene until a homogeneous blend was obtained. To the first blends were then added ethylene acrylic acid copolymer (EAA) and the blends were alloed to mix for an additional 5 minutes. The torque measurements for blending the components were recorded and both blends were then compression molded and tested for melt flow rate, impact, and elongation. These measurements are recorded in Table IV, Sample 1 being an example of the invention and Sample 2 being the control blend.

Experiment 7

Various polymeric alloys were prepared as in Experiment 6 and are also shown in Table IV. A comparison was made between blends of unreactive polymers (Sample 3), the corresponding blend of reactive polymers (Sample 4) and the blend of the miscible base polymer with the corresponding reactive polymer blends (Samples 5 and 6). The samples were prepared, compression molded and measured for melt flow rate, impact, elongation and tensile (Samples 3—6 only). The results are shown in Table IV.

TABLE IV

| Sample* | Polymer Blend (Percent Weight Polymer) | Flow in g/10 min | Notched Izod in J/m and (ft. lbs/in) | Tensile in MP and (psi) | Elongation in percent | Torque After 8 min in Meter·Grams |
|---|---|---|---|---|---|---|
| 1 | 35 PPO/35 SIPO (1% IPO) 30 EAA | .06 | 68.4 (1.28) | -- | 7.8 | 300 |
| 2* | 35 PPO/35 polystyrene 30 EAA | .24 | 29.4 (.55) | -- | 2.0 | 130 |
| 3* | 50 polystyrene 50 LLDPE | 11.93 | 32.6 (.61) | 7.8 (1131) | 1.7 | -- |
| 4 | 50 SIPO (1% IPO) 50 LLDPE (.44% MAH) | 1.03 | 66.8 (1.25) | 24 (3425) | 8.8 | -- |
| 5 | 50 SIPO (1% IPO) 25 LLDPE (.88% MAH)/ 25 LLDPE | 1.10 | 82.2 (1.54) | 27 (3866) | 8.0 | -- |
| 6 | 20 SIPO (2.5% IPO)/ 30 Polystyrene 25 LLDPE (.88% MAH) 25 LLDPE | 1.05 | 75.8 (1.42) | 25 (3638) | 13.2 | -- |

*Not an example of the invention.

PPO - polyphenylene oxide; SIPO - polystyrene/2-isopropenyl-2-oxazoline; IPO - 2-isopropenyl-2-oxazoline; EAA-ethylene acrylic acid; LLDPE - linear low density polyethylene; MAH - maleic anhydride.

It is readily seen from the data presented in Table IV that a compatible blend can be prepared from a miscible nonreactive polymer blended with either or both reactive polymers (Samples 1, 5 and 6). Excellent physical properties are obtained with the blend of this invention in contrast to non-compatible blends of Samples 2 and 3 which generally exhibit poorer properties.

In order to monitor the formation of linkages between the SIPO and EAA polymers, torque measurements were made in Experiment 6 while mixing the EAA and SIPO polymer in a Brabender as described hereinbefore. As a control, a torque measurement was made on a 35 PPO/35 Styrene/30 EAA blend (Sample 2). Upon adding the PPO/polystyrene blend to the softened EAA polymer, the torque exerted by the blend steadily decreased until a constant value of about 130 meter-grams was reached. The low torque value indicates that crosslinking did not occur between the PPO/styrene and EAA polymer.

In like manner, the torque exerted by the 35 PPO/35 SIPO/30 EAA blend (Sample 1), was determined. The final torque exerted in preparing the blend was higher than that of the control (Sample 2), indicating the presence of crosslinking between the PPO/SIPO reactive blend and the EAA polymer.

With respect to the results for Experiment 7, it is seen that the physical properties of the reactive blends (Samples 5 and 6) are better than the comparative nonreactive blend (Sample 3). In addition, it is seen that Samples 5 and 6 which contained the miscible polymers preblended with the reactive polymers were not adversely affected from the inclusion of the miscible polymers in view of Sample 4 which only contained reactive polymers.

## Claims

1. A polymer blend comprising a component having units containing a pendant cyclic iminoether group, characterized in that the blend is a thermoplastic polymer blend comprising a first reactive thermoplastic polymer containing a compatibilizing amount of repeating units containing a pendant cyclic iminoether group, and a second reactive thermoplastic polymer containing a compatibilizing amount of repeating units containing a co-reactive group which is capable of reacting with said cyclic iminoether group to form a linkage between said first and second reactive polymers, wherein said first and second reactive polymers are normally incompatible when said first and second polymers do not contain such cyclic iminoether and co-reactive groups.

2. The blend of claim 1 wherein repeating units of said first reactive polymer which contain a pendant cyclic iminoether comprise from 0.01 to 10 percent by weight of said first reactive polymer and the repeating units of said second reactive polymer which contain said coreactive group comprise from 0.01 to 10 percent by weight of said second reactive polymer.

3. The blend of claim 1 wherein the cyclic iminoether group is a 2-oxazoline group.

4. The blend of claim 3 wherein said first reactive polymer is a polymer of styrene and said second reactive polymer is polymer of an olefin having from 2 to 8 carbon atoms.

5. The blend of claim 4 wherein said first reactive polymer is a copolymer of styrene and a 2-alkenyl-2-oxazoline and second reactive polymer is a polymer comprising ethylene and an α,β-ethylenically unsaturated carboxylic acid.

6. The blend of claim 3 wherein said first reactive polymer is a polymer of styrene and said second reactive polymer is a polymer of a vinyl halide.

7. The blend of claim 1 wherein said blend is characterized by said first and/or second thermoplastic reactive polymer being extended with respective miscible nonreactive polymer(s).

8. The blend of claim 7 wherein said miscible nonreactive polymer(s) is blended with the respective polymer in a five to one weight ratio or less of nonreactive polymer(s) to reactive polymer.

9. The blend of claim 8 wherein said miscible polymer(s) is the base polymer of the respective reactive polymer with which said miscible polymer(s) is blended.

10. The blend of claim 7 wherein said first reactive polymer is a polymer of styrene and a 2-alkenyl-2-oxazoline which is extended with polyphenylene oxide.

## Patentansprüche

1. Polymerischung enthaltend einen Bestandteil, der Einheiten mit einer anhängenden zyklischen Iminoethergruppe enthält, dadurch gekennzeichnet, daß die Mischung eine thermoplastische Polymermischung ist, enthaltend ein erstes reaktives thermoplastisches Polymer mit einer Verträglichkeit verleihenden Menge an wiederkehrenden Einheiten, die eine anhängende zyklische Iminoethergruppe enthalten, und ein zweites reaktives thermoplastisches Polymer mit einer Verträglichkeit verleihenden Menge an wiederkehrenden Einheiten, die eine koreaktive Gruppe enthalten, mit die der zyklischen Iminoethergruppe unter Ausbildung einer Bindung zwischen dem ersten und zweiten reaktiven Polymeren reagieren kann, wobei die ersten und zweiten reaktiven Polymeren normalerweise unverträglich sind, wenn die ersten und zweiten Polymeren nicht solche zyklischen Iminoethergruppe und koreaktive Gruppe enthalten.

2. Mischung nach Anspruch 1, dadurch gekennzeichnet, daß die wiederkehrenden Einheiten des ersten reaktiven Polymeren, das eine anhängende zyklische Iminoethergruppe enthält, von 0,01 bis 10 Gew.-% des ersten reaktiven Polymers ausmachen und die wiederkehrenden Einheiten des zweiten reaktiven

Polymeren, das die koreaktive Gruppe enthält, von 0,01 bis 10 Gew.-% des zweiten reaktiven Polymeren ausmachen.

3. Mischung nach Anspruch 1, dadurch gekennzeichnet, daß die zyklische Iminoethergruppe eine 2-Oxazolingruppe ist.

4. Mischung nach Anspruch 3, dadurch gekennzeichnet, daß das erste reaktive Polymer Styrol und das zweite reaktive Polymer ein Polymer eines Olefins mit 2 bis 8 Kohlenstoffatomen ist.

5. Mischung nach Anspruch 4, dadurch gekennzeichnet, daß das erste reaktive Polymer eine Copolymer von Styrol und einem 2-Alkenyl-2-oxazolin ist und das zweite reaktive Polymer ein Ethylen und eine α,β-ethylenisch ungesättigte Carbonsäure enthaltendes Polymer ist.

6. Mischung nach Anspruch 3, dadurch gekennzeichnet, daß das erste reaktive Polymer eine Polymer von Styrol und das zweite reaktive Polymer ein Polymer eines Vinylhalids ist.

7. Mischung nach Anspruch 1, dadurch gekennzeichnet, daß das erste und/oder zweite thermoplastische reaktive Polymer mit entsprechenden mischbaren, nicht reaktiven Polymeren verschnitten ist (sind).

8. Mischung nach Anspruch 7, dadurch gekennzeichnet, daß das (die) mischbare(n), nicht reaktive(n) Polymere(n) mit dem betreffenden Polymer in einem Gewichtsverhältnis von 5:1 oder weniger des (der) nicht reaktiven Polymeren:reaktives Polymer gemischt ist (sind).

9. Mischung nach Anspruch 8, dadurch gekennzeichnet, daß das (die) mischbare(n) Polymere(n) das Basispolymer des betreffenden reaktiven Polymeren ist, mit dem das (die) mischbare(n) Polymere(n) gemischt ist (sind).

10. Mischung nach Anspruch 7, dadurch gekennzeichnet, daß das erste reaktive Polymer ein Polymer von Styrol und einem 2-Alkenyl-2-oxazolin ist, das mit Polyphenylenoxid verschnitten ist.

**Revendications**

1. Alliage de polymères comprenant un composant comportant des motifs contenant un groupe iminoéther cyclique accroché, caractérisé en ce que l'alliage est un alliage de polymères thermoplastiques comprenant un premier polymère thermoplastique réactif contenant une quantité, conférant la compatibilité, de motifs répétitifs contenant un groupe iminoéther cyclique accroché, et un second polymère thermoplastique réactif contenant une quantité, conférant la compatibilité, de motifs répétitifs contenant un groupe co-réactif qui est capable de réagir avec ledit groupe iminoéther cyclique pour former une liaison entre lesdits premier et second polymères réactifs, lesdits premier et second polymères réactif étant normalement incompatibles lorsque lesdits premier et second polymères ne contiennent pas de tels groupes iminoéther cyclique et co-réactif.

2. Alliage selon la revendication 1, dans lequel les motifs répétitifs dudit premier polymère réactif qui contiennent un groupe iminoéther cyclique accroché constituent de 0,01 à 10 % en poids dudit premier polymère réactif, et les motifs répétitifs dudit second polymère réactif qui contiennent ledit groupe co-réactif constituent de 0,01 à 10 % en poids dudit second polymère réactif.

3. Alliage selon la revendication 1, dans lequel le groupe iminoéther cyclique est un groupe 2-oxazoline.

4. Alliage selon la revendication 3, dans lequel ledit premier polymère réactif est un polymère de styrène et ledit second polymère réactif est un polymère d'une oléfine ayant de 2 à 8 atomes de carbone.

5. Alliage selon la revendication 4, dans lequel ledit premier polymère réactif est un copolymère de styrène et d'une 2-alcényl-2-oxazoline, et ledit second polymère réactif est un polymère comprenant de l'éthylène et un acide carboxylique à insaturation α,β-éthylènique.

6. Alliage selon la revendication 3, dans lequel ledit premier polymère réactif est une polymère de styrène et ledit second polymère réactif est un polymère d'un halogénure de vinyle.

7. Alliage selon la revendication 1, dans lequel ledit alliage est caractérisé en ce que le premier polymère réactif thermoplastique et/ou le second est(sont) dilué(s) avec un (des) polymère(s) miscible(s) non réactif(s) respectif(s).

8. Alliage selon la revendication 7, dans lequel le(s) dit(s) polymère(s) miscible(s) non réactif(s) est(sont) mélangé(s) avec le polymère respectif en un rapport pondéral du(des) polymère(s) non réactif(s) au polymère réactif égal à 5:1 ou moins.

9. Alliage selon la revendication 8, dans lequel le(s)dit(s) polymère(s) miscible(s) est(sont) le polymère de base du polymère réactif respectif avec lequel est(sont) mélangé(s) le(s)dit(s) polymère(s) miscible(s).

10. Alliage selon la revendication 7, dans lequel ledit premier polymère réactif est un polymère de styrène et d'une 2-alcényl-2-oxazoline qui est dilué avec un poly(oxyphénylène).